(19) Europäisches Patentamt / European Patent Office / Office européen des brevets

(11) **EP 1 909 593 B1**

## (12) FASCICULE DE BREVET EUROPEEN

(45) Date de publication et mention de la délivrance du brevet:
**29.09.2010 Bulletin 2010/39**

(21) Numéro de dépôt: **06794215.1**

(22) Date de dépôt: **25.07.2006**

(51) Int Cl.:
***A23J 1/14*** *(2006.01)*

(86) Numéro de dépôt international:
**PCT/FR2006/001816**

(87) Numéro de publication internationale:
**WO 2007/017572 (15.02.2007 Gazette 2007/07)**

(54) **COMPOSITION DE PROTEINES DE POIS**

ERBSENPROTEINZUSAMMENSETZUNG

PEA PROTEIN COMPOSITION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.08.2005 FR 0508398**

(43) Date de publication de la demande:
**16.04.2008 Bulletin 2008/16**

(73) Titulaire: **Roquette Frères
62136 Lestrem (FR)**

(72) Inventeurs:
- **PASSE, Damien
  F-59800 Lille (FR)**
- **FOUACHE, Catherine
  F-62113 Sailly-Labourse (FR)**
- **VERRIN, Jean-Marc
  F-62660 Beuvry les Bethune (FR)**
- **BUREAU, Stéphanie
  F-62400 Essars (FR)**

(74) Mandataire: **Cabinet Plasseraud
52, rue de la Victoire
75440 Paris Cedex 09 (FR)**

(56) Documents cités:
**EP-B1- 1 400 537       DD-A1- 214 527
US-A- 4 563 360       US-A- 5 658 714
US-A1- 2004 091 600**

- **DATABASE WPI Section Ch, Week 199646 Derwent Publications Ltd., London, GB; Class D13, AN 1996-462955 XP002380067 & RU 2 054 265 C1 (BOGRACHEVA T YA) 20 février 1996 (1996-02-20)**
- **EHLERS B. ET AL: 'Marktchancen der Markerbsenstärke', 1997, LANDWIRTSCHAFTSVERLAG GMBH, MÜNSTER * page 40 - page 50 * * page 104 - page 111 ***

Remarques:
Le dossier contient des informations techniques présentées postérieurement au dépôt de la demande et ne figurant pas dans le présent fascicule.

**Description**

La présente invention est relative à une composition de protéines de pois à haute teneur en protéines caractérisée par son profil de distribution des poids moléculaires et sa teneur en protéines solubles.

Au sens de l'invention, on entend par « haute teneur en protéines », une teneur en protéines sur matière sèche d'au mois 60 % en poids, de préférence comprise entre 60 et 95 %

La présente invention est également relative à une composition de protéines de pois caractérisée par sa solubilité en fonction du pH, sa faible teneur en matières grasses extractibles et sa faible teneur en facteurs antitrypsiques.

Le pois est la légumineuse à graines riches en protéines qui, depuis les années 70, s'est le plus développée en Europe et majoritairement en France, notamment comme ressource protéique pour l'alimentation animale, mais aussi pour l'alimentation humaine.

Les protéines de pois sont constituées, comme toutes les protéines de légumineuses, de trois classes de protéines : les globulines, les albumines et les protéines dites « insolubles ».

Les protéines solubles du pois (soit 85 % des protéines totales) rassemblent :

- les globulines (légumines, vicilines et convicilines), qui sont les principales protéines de réserve de la plante, et
- les albumines, qui sont constituées de molécules ayant un rôle fonctionnel dans la graine (majoritairement les albumines PA1 et PA2).

Une classe mineure, représentant 15 % des protéines de la graine, est constituée des protéines insolubles. Cette fraction est rarement prise en compte dans la littérature en raison des difficultés rencontrées pour son analyse.

La première classe de protéines solubles sont les globulines, solubles dans les solutions aqueuses salines et représentant entre 65 et 80 % des protéines de pois.

Elles regroupent deux protéines majeures (la légumine et la viciline) et une troisième présente en plus faible quantité (la conviciline).

Le rapport viciline / légumine varie de 0,5 à 1,7 avec une moyenne de 1,1.

Les globulines contiennent une forte quantité d'arginine, d'acide aspartique et d'acide glutamique.

Les légumines sont des protéines hexamériques de 360 à 410 kDa composées de 6 sous-unités bicaténaires de 60 kDa.

Les vicilines sont des protéines trimériques dont la masse varie de 150 à 200 kDa.

Les convicilines présentent une structure tétramérique et leurs polypeptides constitutifs ont une masse d'environ 74 kDa. La forme finale de la protéine a une masse d'environ 280 kDa.

La deuxième classe de protéines solubles sont les albumines, protéines de faible masse moléculaire, solubles dans l'eau.

Les albumines représentent généralement entre 20 et 35 % des protéines extractibles du cotylédon et incluent la plupart des protéines enzymatiques et métaboliques (environ 100 protéines différentes sont regroupées dans cette famille).

Les albumines sont riches en acides aminés soufrés et en lysine.

Les deux albumines majoritaires (PA1 et PA2) de masse 8 à 10 kDa et de masse 22 à 26 kDa, représentant 34 % de la fraction albumines totales (environ 17 % chacune).

Leur composition en acides aminés est plus équilibrée par rapport à celles des globulines, d'où une meilleure qualité nutritionnelle des albumines.

Les autres protéines biologiquement actives classées parmi les albumines sont : les lipoxygénases (catalyseurs de l'oxydation des alcènes et notamment des acides gras), les lectines (par leur capacité à agglutiner des molécules glucidiques) et les inhibiteurs de protéases.

Chez le pois, les inhibiteurs de protéases les plus abondants sont les inhibiteurs de protéases à sérine, et plus particulièrement les inhibiteurs trypsiques. Ce sont des protéines de faible masse moléculaire (environ 16 kDa), riches en cystéine impliquée dans de nombreux ponts disulfures.

Ces inhibiteurs sont des protéines ou des polypeptides qui se lient de manière spécifique et stable aux enzymes protéolytiques et empêchent leur fonctionnement. Ceux-ci abaissent donc la valeur nutritionnelle des aliments.

La qualité des compositions de protéines de pois, recherchée pour leurs applications en alimentations humaine et animale, est basée sur les propriétés fonctionnelles des protéines constitutives desdites compositions prises individuellement.

Ces propriétés fonctionnelles sont leur capacité à se lier à l'eau, à se lier aux matières grasses, leur pouvoir moussant, dispersant, gélifiant, émulsifiant, leur solubilité et leur thermostabilité.

En fonction du type de protéines, les propriétés des compositions protéiques résultantes sont différentes, et changent essentiellement en fonction de certains paramètres, tels que par exemple la température ambiante ou le pH.

Il apparaît ainsi dans la littérature qu'en fonction des requis techniques, les propriétés des compositions protéiques doivent être ajustées de manière sélective par le choix de paramètres de fabrication tout à fait particuliers.

Ces paramètres de fabrication favorisent alors la présence de telles ou telles autres protéines constitutives du pois (par exemple albumines ou globulines) dans les compositions protéiques considérées.

Il se déduit de ce qui précède que l'utilisation des compositions de protéines de pois dans les applications alimentaires chez l'homme et l'animal est fonction de leur mode de préparation.

Ces modes de préparation conduisent classiquement à l'obtention de « concentrats de protéines de pois » ou d' « isolats de protéines de pois », quand le procédé d'extraction ne s'arrête pas à la préparation de la seule farine (cf la revue de J. GUEGUEN de 1983 dans Proceedings of european congress on plant proteins for humain food (3-4) pp 267 - 304).

Les concentrats et les isolats de protéines de pois sont définis dans la revue de J. GUEGUEN en regard de leur contenu en protéines :

- les concentrats de protéines de pois sont décrits comme présentant un contenu en protéines totales de 60 à 75 % sur sec, et

- les isolats de protéines de pois sont décrits comme présentant un contenu en protéines totales de 90 à 95 % sur sec,

le % étant exprimé en contenu en azote N x 6,25 (cf la revue de M. SORAL-SMIETANA et al dans Polish Journal of food and nutrition Sciences, 1998, vol 7/48 N°2, pp 193 - 200).

Deux voies sont classiquement utilisées pour extraire les isolats et les concentrats de protéines de pois : la voie humide et la voie sèche.

L'utilisation de la voie humide (par extraction alcaline et précipitation acide ou ultrafiltration) pour l'extraction des protéines de pois n'est préconisée par les spécialistes du domaine que pour l'obtention d'isolats de protéines.

En effet, la faible quantité de carbohydrates solubles ne permet pas l'utilisation de la voie humide pour l'obtention des concentrats de protéines de pois.

Ces procédés d'obtention des isolats de protéines de pois sont souvent privilégiés car ils conduisent à des compositions contenant moins de facteurs anti-nutritionnels.

L'utilisation de la voie sèche, i.e. les procédés de classification par air, permet l'obtention des concentrats de protéines de pois.

Il n'est donc pas possible de disposer d'un procédé unique permettant de préparer à façon à la fois des isolats et des concentrats de protéines de pois.

On obtient alors des compositions de protéines au comportement différent, notamment sur le plan de leur solubilité dans l'eau en fonction du pH.

En effet, le profil de solubilité dans l'eau des isolats et des concentrats de protéines de pois (albumines comme globulines) est dépendant du pH de la solution aqueuse, étant donné les valeurs de leurs pH isoélectriques (ou pHi) respectifs.

Par exemple, les isolats de protéines de pois présentent classiquement une excellente solubilité à pH alcalin et dans des gammes de pH très acide, comprise entre 2 et 3.

La plus faible solubilité est obtenue dans des zones de pH voisine du pH isoélectrique des protéines constitutives des isolats, i.e. des zones de pH comprises entre 4 et 6.

Les isolats de protéines de pois présentent par ailleurs de bonnes propriétés moussantes, mais doivent être concentrés pour être plus visqueux.

La qualité des compositions protéiques du pois de l'état de la technique est donc directement dépendante des conditions opératoires mises en oeuvre pour les préparer.

Au sein d'un même mode de préparation, en l'occurrence la voie humide, le choix d'un procédé d'extraction acide, alcalin ou neutre va également influencer directement les propriétés moussantes ou émulsifiantes des compositions protéiques obtenues.

De telles compositions protéiques ne peuvent donc être utilisées telles quelles dans n'importe quels domaines d'applications.

Il peut être alors nécessaire de modifier les compositions protéiques obtenues de manière à leur conférer les propriétés souhaitées, à l'aide par exemple de technologies complexes comme l'hydrolyse enzymatique.

Par exemple, pour l'aspect clef de la solubilité des compositions protéiques dans l'eau, il pourra être préféré d'utiliser des hydrolysats de protéines de pois plutôt que les protéines de pois elles-mêmes, malgré toutes les conséquences prévisibles sur la qualité du produit final que cela occasionnera.

De tout ce qui précède, il résulte qu'il existe un besoin non satisfait de disposer d'une composition de protéines de pois à haute teneur en protéines qui présente, par son profil en protéines, des propriétés fonctionnelles remarquables, telles que sa solubilité dans l'eau, mais aussi sa capacité à se lier à l'eau, à se lier aux matières grasses, son pouvoir moussant, dispersant, gélifiant et émulsifiant.

US-A-2004/0 091 600 divulgue un procédé d'extraction des protéines de la farine de pois.

La Société Demanderesse a eu le mérite de concilier tous ces objectifs réputés jusqu'alors difficilement conciliables, en proposant une composition de protéines de pois, **caractérisée en ce qu'**elle présente

- une teneur en protéines sur matière sèche d'au moins 60 % en poids, de préférence comprise entre 60 et 95 % en poids,
- un profil de distribution des poids moléculaires qui est constitué de :

  - 1 à 8 %, de préférence de 1,5 à 3 % de protéines de plus de 100.000 Da,
  - 20 à 55 %, de préférence de 25 à 55 % de protéines de plus de 15.000 et d'au plus de 100.000 Da,
  - 15 à 30 % de protéines de plus de 5.000 et d'au plus de 15.000 Da,
  - et de 25 à 50 %, de préférence de 25 à 45 % de protéines d'au plus de 5.000 Da,

- une teneur en protéines solubles, exprimée selon un test de mesure de la solubilité dans l'eau des protéines, comprise entre 20 et 85 %, de préférence comprise entre 20 et 65 %.

De manière surprenante et inattendue, la composition de protéines de pois selon l'invention présente une teneur en protéines d'au moins 60 %, de préférence comprise entre 60 et 95 % en poids sur sec qui autorise la mise à disposition à façon d'isolats ou de concentrats de protéines de pois.

La détermination de la teneur en protéines de ladite composition protéique conforme à l'invention est réalisée par la méthode de détermination de l'azote selon la méthode de DUMAS dans des échantillons dont la teneur présumée en azote est supérieure à 0,030 % (poids/poids), selon la norme NF V 18-120 - mars 1997.

La teneur en azote ou en protéines (N x 6,25) est exprimée en grammes pour 100 grammes de produit sec.

A titre d'exemple, les compositions de protéines de pois commercialisées par les sociétés COSUCRA S.A. (Momalle - Belgique) ou PARRHEIM (Canada), sont uniquement commercialisées sous la forme d'isolats, sous les noms de marque respectives PISANE® et PROPULSE".

La PISANE® et la PROPULSE™ présentent ainsi une teneur en protéines totales jusqu'à 85 %.

La composition de protéines de pois selon l'invention présente un profil de distribution des poids moléculaires qui est constitué de :

- 1 à 8 %, de préférence de 1,5 à 3 % de protéines de plus de 100.000 Da,
- 20 à 55 %, de préférence de 25 à 55 % de protéines de plus de 15.000 et d'au plus de 100.000 Da,
- 15 à 30 % de protéines de plus de 5.000 et d'au plus de 15.000 Da,
- et de 25 à 50 %, de préférence de 25 à 45 % de protéines d'au plus de 5.000 Da.

La détermination des poids moléculaires des protéines constitutives de ladite composition est réalisée par chromatographie d'exclusion stérique ; la séparation se fait en fonction de la taille des molécules à séparer, les molécules de taille élevée étant éluées en premier.

La séparation est effectuée sur colonnes SUPERDEX 200 HR 10/30 et SUPERDEX Peptide HR 10/30 de Pharmacia Biotech mises en série, munies d'un détecteur UV 486 à 214 nm.

Le débit est réglé à 0,3 ml/min et la séparation s'effectue à température ambiante.

Il est procédé à une injection de 100 μl à 0,5 de brix, et les protéines sont éluées par du NaCl 0,05M (2,92 g/l) dans de l'eau qualité HPLC.

L'échantillon à injecter sur la colonne est préparé comme suit : on pèse dans un bêcher de 50 ml exactement 0,1 g de l'échantillon, place 20 ml d'eau, laisse agiter à l'aide d'un barreau aimanté sur agitateur magnétique à 200 rpm pendant 1 heure. On filtre ensuite sur 0,45 μm et règle le brix à 0,5.

La colonne est calibrée avec un mélange témoin commercialisé par BIORAD sous la référence 151-1901 composé de composés de pois moléculaire connu, i.e. la thyroglobuline (670.000 Da), l'albumine bovine (158.000 Da), l'ovalbumine (44.000 Da), la myoglobuline (17.000 Da) et la vitamine B12 (1.350 Da).

On trace la courbe Log (PM) en fonction du temps de rétention, et détermine ledit temps de rétention des composés protéiques de poids moléculaire de plus de 100.000 Da, de plus de 15.000 et d'au plus de 100.000 Da, de plus de 5.000 et d'au plus de 15.000 Da et d'au plus de 5.000 Da.

On démarre l'intégration des pics aux temps de rétention trouvés et effectue un dosage par répartition de surface.

Les résultats sont donnés en pourcentage de surface. La répartition des surfaces du chromatogramme est représentative de la composition de la fraction protéique solubilisée dans l'eau.

Le pourcentage en protéines sur sec d'un pic du chromatogramme est donné par l'expression suivante :

$$\text{\%/sec d'un pic} = \frac{SP}{ST}$$

où SP représente la surface du pic, et *ST* la surface totale du chromatogramme.

Comme il sera exemplifié ci-après, la composition de protéines de pois présente un profil de distribution des poids moléculaires tout à fait unique, bien différent de celui des isolats de protéines de pois accessibles dans le commerce, notamment ceux de la PISANE® et de la PROPULSE™.

Cette composition protéique présente une teneur en protéines solubles, exprimée selon un test de mesure de la solubilité dans l'eau des protéines, comprise entre 20 et 85 %, de préférence comprise entre 20 et 65 %.

Ce test de mesure de la solubilité dans l'eau des protéines consiste à déterminer la teneur en matières solubles dans l'eau sans ajustement du pH par une méthode de dispersion d'une prise d'essai de l'échantillon dans de l'eau distillée, centrifugation et analyse du surnageant.

Dans un bécher de 400 ml, on introduit 200.0 g d'eau distillée à 20°C $\pm$ 2°C, et place sous agitation magnétique (barreau aimanté et rotation à 200 rpm). On ajoute exactement 5 g de l'échantillon à analyser.

On agite pendant 30 min, et on centrifuge pendant 15 minutes à 4.000 rpm. On réalise, sur le surnageant, la méthode de détermination de l'azote selon la méthode de DUMAS précédemment citée.

La teneur en azote ou en protéines (N x 6,25) est exprimée en grammes pour 100 grammes de produit sec. La composition protéique selon l'invention présente ainsi une teneur en protéines solubles sur sec qui varie avantageusement entre 20 et 85 % de préférence comprise entre 20 et 65 %.

La composition protéique selon l'invention peut être également caractérisée par sa solubilité aqueuse en fonction du pH, et plus particulièrement à une valeur de pH proche du pHi de la majorité des protéines du pois, i.e. valeur de pH comprise entre 4 et 6.

La composition protéique selon l'invention est ainsi **caractérisée en ce que** sa solubilité aqueuse déterminée selon un test de mesure de la solubilité dans l'eau des protéines est :

- comprise entre 10 et 20 % à pH 4,
- comprise entre 15 à 50 %, de préférence de 20 à 45 % à pH 6.

La mesure de la solubilité est réalisée dans les mêmes conditions que celles du test de mesure de la solubilité dans l'eau des protéines, à l'exception près que les 200 g d'eau distillée qui sont ajoutés sous agitation au 5 g d'échantillon à analyser sont ajustés à un pH de 4 ou à un pH de 6 selon le cas.

Il est admis généralement que les protéines de pois présentent une solubilité relativement faible dans la gamme de pH avoisinant leur pHi.

Cela reste vrai pour la composition protéique selon l'invention, à l'exception près que, comme il sera exemplifié ci-après, la solubilité est égale, voire au mieux 1,5 fois plus grande à pH 4, et de solubilité meilleure à pH 6 (jusqu'à deux fois plus soluble) que les isolats de protéines de pois PISANE® ou PROPULSE™.

La composition protéique selon l'invention est également caractérisée par sa teneur en matières grasses extractibles.

Cette teneur en matières grasses extractibles est déterminée selon le procédé A de la 2ème directive CEE amendée par celle du 20 décembre 1983, publiée au JOCE de 18 janvier 1984, - repris dans la NF V18-117 d'août 1997 « échantillons de catégorie A ».

Le principe de cette méthode repose sur l'extraction par l'hexane des lipides d'un échantillon de 25 g dans un extracteur de type SOXHLET (le débit du reflux doit être réglé de façon à obtenir 10 cycles par heure), l'élimination du solvant et la pesée du résidu ainsi obtenu.

La teneur en lipides extractibles est exprimée en pourcentage en poids du résidu par rapport aux 25 g d'échantillon analysé.

La composition protéique selon l'invention présente alors une teneur en matières grasses extractibles comprise entre 0,3 et 5 %, de préférence compris entre 0,3 et 3 %, plus préférentiellement compris entre 0,3 et 1,5 % en poids.

Cette faible teneur en matières grasses extractibles est le reflet du niveau de pureté de ladite composition protéique.

Quant à la présence de facteurs antitrypsiques, preuve de la qualité nutritionnelle de la composition protéique conforme à l'invention, elle est déterminée comme comprise entre 2 et 5,5 TIU/mg.

La détermination de facteurs antitrypsiques consiste à extraire par de la soude les inhibiteurs de la trypsine. Des volumes croissants de l'échantillon dilué sont alors mis en contact avec un excès de trypsine en présence de N-alpha-benzoyl D L-arginine p-nitroanilide (BAPNA) qui va alors être hydrolysé sous forme de p-nitroaniline, composé absorbant à 410 nm. Après blocage de la réaction à l'acide acétique, l'augmentation de coloration est mesurée au spectrophotomètre à 410 nm.

La teneur en inhibiteurs est alors calculée à partir de la vitesse de diminution de la coloration.

Une unité de trypsine est arbitrairement définie comme la quantité d'enzyme nécessaire pour entraîner un accroissement de 0,01 unités de l'absorbance à 410 nm pour 10 ml de mélange réactionnel dans les conditions de la méthode AOCS Ba 12-75.

D'après les travaux de KAKADE et al, 1969, 1 μg de trypsine pure a une activité de 1,9 UT (unité d'activité trypsique), soit une absorbance de 0,019 unités.

A la connaissance de la société Demanderesse, les propriétés fonctionnelles de la composition de protéines de pois conforme à l'invention, tant au niveau de son profil de distribution des poids moléculaires, de sa solubilité dans l'eau (notamment aux pH 4 et 6), de sa teneur en matières grasses extractibles ou de sa teneur en facteurs anti-trypsiques n'ont jamais été obtenues pour une composition protéique de pois classique.

Une première famille de produits conformes à l'invention est constituée par des compositions de protéines de pois, qui présentent de préférence un profil de distribution des poids moléculaires qui est constitué de :

- 20 à 40 %, de préférence de 25 à 35 % de protéines de plus de 15.000 et d'au plus 100.000 Da,
- 15 à 30 %, de préférence de 20 à 30 % de protéines de plus de 5.000 et d'au plus 15.000 Da,
- et de 40 à 50 %, de préférence de 40 à 45 % de protéines d'au plus 5.000 Da,
- une teneur en protéines solubles, déterminée selon un test de mesure de la solubilité dans l'eau des protéines, comprise entre 40 et 85, de préférence comprise entre 60 et 65 %.

Par ailleurs, cette composition est **caractérisée en ce que** sa solubilité aqueuse est :

- comprise entre 10 et 15 %, de préférence de 10 à 13,5 % à pH 4,
- comprise entre 25 et 50 %, de préférence de 40 à 45 % à pH 6.

Une seconde famille de produits conformes à l'invention est constituée par des compositions de protéines de pois, qui présentent de préférence un profil de distribution des poids moléculaires qui est constitué de :

- 40 à 55 %, de préférence de 50 à 55 % de protéines de plus de 15.000 et d'au plus 100.000 Da,
- 15 à 30 %, de préférence de 15 à 20 % de protéines de plus de 5.000 et d'au plus 15.000 Da
- et de 25 à 40 %, de préférence de 25 à 30 % de protéines d'au plus de 5.000 Da,
- une teneur en protéines solubles, déterminée selon un test de mesure de la solubilité dans l'eau des protéines totales, comprise entre 20 et 55 %.

Par ailleurs, cette composition est **caractérisée en ce que** sa solubilité aqueuse est :

- comprise entre 10 et 20 % à pH 4,
- comprise entre 15 et 35 %, de préférence de 20 à 35 % à pH 6.

La composition protéique conforme à l'invention est susceptible d'être obtenue en mettant en oeuvre les étapes suivantes.

L'extraction des composants de la farine de pois peut être réalisée par tout moyen et en particulier selon le procédé décrit dans la demande de brevet EP 1.400.537 dont la société Demanderesse est titulaire.

Plus particulièrement ce procédé consiste dans la succession des étapes suivantes :

- préparer une farine par broyage de pois secs préalablement nettoyés, triés, émondés, dépoussiérés,
- mettre en suspension la farine de pois dans de l'eau,
- fractionner ladite suspension de manière à isoler une fraction riche en protéines,
- isoler la composante protéique de ladite fraction par une technique de floculation thermique au pH isoélectrique desdites protéines et à une température comprise entre 40 et 70°C pendant de 5 à 30 minutes, de préférence de 10 à 30 minutes,
- centrifuger le mélange précipité à l'aide d'une décanteuse centrifuge ou une séparatrice à assiettes de manière à récupérer les protéines solubles dans le précipité,
- diluer le précipité dans de l'eau pour obtenir une matière sèche comprise entre 5 et 15 %,
- rectifier le pH de la solution à une valeur comprise entre 7 et 7,5,
- éventuellement, traiter thermiquement ledit précipité remis en suspension dans de l'eau à une température de 75 à 95°C pendant de 10 minutes à 1 heure,
- récupérer et sécher la composition protéique ainsi obtenue.

Dans une première étape du procédé conforme à l'invention, la farine obtenue à partir de pois préalablement nettoyés, triés, émondés, dépoussiérés et broyés est mise en suspension dans de l'eau.

Le pH de la solution n'est pas un facteur limitant, mais on choisit de ne pas rectifier le pH de la suspension, ce qui conduit à travailler dans une gamme de pH compris entre 6,2 et 7.

De manière avantageuse, la société Demanderesse recommande de placer la farine dans de l'eau à une température comprise entre 5 et 20°C, de préférence de l'ordre de 15°C, plus préférentiellement à une température de 5°C, refroidie de manière à limiter le développement de bactéries indésirables.

Bien que cela ne soit pas indispensable, il peut être choisi de laisser diffuser la suspension dans ce milieu aqueux pendant un temps court compris entre 5 min et 2 heures, à cette température.

Dans une deuxième étape du procédé conforme à l'invention, on choisit de fractionner ladite suspension de farine dans l'eau par tout moyen connu par ailleurs de l'homme du métier de manière à isoler une fraction riche en protéines.

On peut utiliser alors un équipement choisi dans le groupe constitué des hydrocyclones et des décanteurs centrifuges.

Dans un premier mode préféré de réalisation, le fractionnement de la suspension de farine dans l'eau consiste à fractionner ladite suspension sur des décanteurs centrifuges, de manière à isoler une fraction riche en protéines et solubles d'une fraction constituée du mélange amidon et fibres internes.

Dans un deuxième mode préféré de réalisation, le fractionnement de la suspension de farine dans l'eau consiste à fractionner ladite suspension sur des hydrocyclones, de manière à isoler une fraction riche en amidon d'une fraction constituée du mélange protéines, fibres internes et solubles, puis à traiter la fraction constituée du mélange de protéines, de fibres internes et solubles sur des décanteurs centrifuges de manière à séparer une fraction riche en fibres internes d'une fraction riche en protéines et solubles.

Dans une troisième étape du procédé conforme, à l'invention, on isole les protéines de la fraction renfermant le mélange de protéines et de solubles ainsi obtenu (que ce soit par le premier ou le deuxième mode préféré), par une technique choisie dans le groupe des techniques de précipitation des protéines à leur pH isoélectrique et des techniques de séparation membranaire de type ultrafiltration.

Il est avantageusement choisi de réaliser la floculation thermique des protéines, en ajustant la fraction riche en protéines à une valeur de pH correspondant au point isoélectrique (pI) des dites protéines, i.e. à une valeur de pH de l'ordre de 4,5.

On procède ensuite à la floculation desdites protéines à une température comprise entre 40 et 70°C pendant 5 à 30 minutes, de préférence entre 10 à 30 minutes.

Ce diagramme temps/température de floculation permet ainsi d'obtenir un rendement de récupération des protéines compris entre 65 et 85 % de protéines extraites / protéines totales.

La séparation du précipité (encore appelé « floc ») renfermant les protéines solubles s'effectue sur décanteur centrifuge ou en séparatrice à assiettes.

Le floc est ensuite dilué jusqu'à une matière sèche comprise entre 5 et 15 % afin de permettre son acheminement vers les installations d'atomisation pour être séché et conditionné.

Le pH est rectifié de manière à obtenir une valeur comprise entre 7 et 7,5.

Cette atomisation est réalisée dans des conditions classiques, bien connue de l'homme du métier.

Pour sécher le produit, on choisit avantageusement de procéder à une atomisation sur une tour de type simple effet à buse d'air comprimé, dans les conditions suivantes .:

- température de l'air de séchage : 130 à 180°C
- température des buées : 80 à 90°C
- capacité d'évaporation : 15 à 25 l/h
- pression : 0,5 à 2 bars

Le traitement de floculation thermique de la fraction riche en protéines et solubles puis de séchage par atomisation permet l'obtention d'une composition protéique conforme à l'invention présentant un profil de distribution des poids moléculaires qui est constitué de :

- 20 à 40 %, de préférence de 25 à 35 % de protéines de plus de 15.000 et d'au plus 100.000 Da,
- 15 à 30 %, de préférence de 20 à 30 % de protéines de plus de 5.000 et d'au plus 15.000 Da,
- et de 40 à 50 %, de préférence de 40 à 45 % de protéines d'au plus 5.000 Da,
- une teneur en protéines solubles, déterminée selon un test de mesure de la solubilité dans l'eau des protéines, comprise entre 40 et 85 %, de préférence comprise entre 60 et 65 %.

Par ailleurs, cette composition est **caractérisée en ce que** sa solubilité aqueuse est :

- comprise entre 10 et 15 %, de préférence comprise entre 10 et 13,5 % à pH 4,
- comprise entre 25 et 50 %, de préférence comprise entre 40 et 45 % à pH 6.

Un traitement thermique complémentaire peut être réalisé avant l'étape de séchage par atomisation, après l'étape de floculation thermique, de dilution puis de rectification de pH du floc obtenu, traitement effectué à une température de 75 à 95 °C pendant de 10 minutes à 1 heure

Ce traitement thermique l'obtention d'une composition protéique conforme à l'invention présentant un profil de distribution des poids moléculaires qui est constitué de :

- 40 à 55 %, de préférence de 50 à 55 % de protéines de plus de 15.000 et d'au plus 100.000 Da,
- 15 à 30 %, de préférence de 15 à 20 % de protéines de plus de 5.000 et d'au plus 15.000 Da
- et de 25 à 40 %, de préférence de 25 à 30 % de protéines d'au plus de 5.000 Da,
- une teneur en protéines solubles, déterminée selon un test de mesure de la solubilité dans l'eau des protéines totales, comprise entre 20 et 55 %.

Par ailleurs, cette composition est **caractérisée en ce que** sa solubilité aqueuse est :

- comprise entre 10 et 20 % à pH 4,
- comprise entre 15 et 35 %, de préférence compris entre 20 et 35 % à pH 6.

Si ce deuxième traitement thermique permet d'augmenter de manière significative la viscosité de la composition protéique ainsi obtenue, il conduit généralement à une diminution de l'activité anti-trypsique de ladite composition, tout en réduisant quelque peu sa solubilité dans l'eau, comme il sera exemplifié ci-après.

La composition de protéines de pois ainsi obtenue présente de remarquables propriétés de solubilité, dans l'eau, mais également d'excellentes propriétés de rétention d'eau, et de pouvoir émulsifiant et gélifiant.

Ceci les destine à des applications en fermentation, en nutrition animale et surtout dans des applications alimentaires :

- dans les boissons et produits laitiers,
- dans les mélanges de poudres destinées à des produits de régime, ou pour sportifs,
- dans les soupes et sauces,
- dans les produits à base de viandes, plus particulièrement dans les secteurs des pâtes fines et des saumures,
- dans les produits à base de poissons, comme les produits à base de surimi,
- dans les produits céréaliers, comme pain, pates, biscuits, pâtisseries, céréales et barres,
- dans les produits végétariens et plats cuisinés.

La composition de protéines de pois selon l'invention qui présente un profil de distribution des poids moléculaires qui est constitué de :

- 20 à 40 %, de préférence de 25 à 35 % de protéines de plus de 15.000 et d'au plus 100.000 Da,
- 15 à 30 %, de préférence de 20 à 30 % de protéines de plus de 5.000 et d'au plus 15.000 Da,
- et de 40 à 50 %, de préférence de 40 à 45 % de protéines d'au plus 5.000 Da,
- une teneur en protéines solubles, déterminée selon un test de mesure de la solubilité dans l'eau des protéines, comprise entre 40 et 85 %, de préférence comprise entre 60 et 65 %.

et par ailleurs, une solubilité aqueuse :

- comprise entre 10 et 15 %, de préférence comprise entre 10 et 13,5 % à pH 4,
- comprise entre 20 et 50 %, de préférence comprise entre 40 et 45 % à pH 6.

peut être avantageusement utilisée dans le secteur des saumures, notamment dans la fabrication des jambons.

Elle peut-être également utilisée dans les applications boissons et produits laitiers.

Quant à la composition de protéines de pois selon l'invention, qui présente un profil de distribution des poids moléculaires qui est constitué de :

- 40 à 55 %, de préférence de 50 à 55 % de protéines de plus de 15.000 et d'au plus 100.000 Da,
- 15 à 30 %, de préférence de 15 à 20 % de protéines de plus de 5.000 et d'au plus 15.000 Da
- et de 25 à 40 %, de préférence de 25 à 30 % de protéines d'au plus de 5.000 Da,

et une teneur en protéines solubles, déterminée selon un test de mesure de la solubilité dans l'eau des protéines totales, comprise entre 20 et 55 %.

et par ailleurs, une solubilité aqueuse :

- comprise entre 10 et 20 % à pH 4,
- comprise entre 15 et 35 %, de préférence comprise entre 20 et 35 % à pH 6.

peut être avantageusement utilisée dans le secteur des pâtes fines.

D'autres caractéristiques et avantages de l'invention apparaîtront à la lecture des exemples non limitatifs décrits ci-dessous.

## Exemple 1

On prépare trois lots d'une composition de protéines de pois conformes à l'invention de la manière suivante :

De la farine de pois est préparée par broyage de pois fourragers décortiqués sur broyeur à marteaux de type ALPINE équipé d'une grille de 100 μm.

300 kg de farine à 87 % de matière sèche sont ensuite mis à tremper dans de l'eau à la concentration finale de 25 % sur sec, à un pH de 6,5.

1044 kg de suspension de farine à 25 % de matière sèche (soit donc 261 kg de farine sèche) sont alors introduits avec 500 kg d'eau dans une batterie d'hydrocyclones de 14 étages, alimentée par la suspension de farine à l'étage n°5.

Cette séparation conduit à l'obtention d'une phase légère qui correspond à la sortie de l'étage n°1.

Elle est constituée du mélange protéines, fibres internes et solubles.

Cette phase légère en sortie d'hydrocyclones renferme en mélange (142 kg sur sec au total) : les fibres (environ 14,8 % en poids, soit 21 kg sec), les protéines (environ 42,8 % en poids, soit 60,8 kg sec) et de solubles (environ 42,4 % en poids, soit 60,2 kg sec). Cette fraction présente une matière sèche de 10 %.

On procède à la séparation des fibres sur décanteurs centrifuges de type WESPHALIA.

La phase légère en sortie de décanteur centrifuge renferme un mélange de protéines et de solubles, tandis que la phase lourde renferme les fibres de pois.

La phase lourde renferme 105 kg de fibres à 20 % de matière sèche.

On constate que la quasi-totalité des fibres est bien retrouvée dans cette fraction. Quant à la fraction protéines et solubles, elle renferme 1142 kg d'un mélange en solution de solubles et de protéines (fraction à 6 % de matière sèche).

On procède à la floculation des protéines à leur point isoélectrique par ajustement de la phase légère en sortie de décanteur centrifuge à un pH de 4,5 et chauffage à 60 °C par passage en tuyère. Les protéines ainsi mises à floculer sont laissées 10 minutes en cuve de maturation.

On procède ensuite à la séparation solubles / protéines sur décanteur centrifuge. Le mélange obtenu en sortie de la cuve de maturation alimente alors la décanteuse centrifuge à un débit de 0,5 m³/h.

La phase lourde, ou « floc », d'une matière sèche de 35 % est diluée à 10 % par ajout d'eau. Le pH du floc de 4,5 est rectifié à une valeur de 7,5 par ajout de soude.

On procède enfin à une atomisation sur tour de type simple effet à buse à air comprimé pour sécher le produit, dans les conditions suivantes :

- température de l'air de séchage : 150°C

- température des buées : 85°C

- capacité d'évaporation : 20 l/h

- pression : 1 bar

L'ensemble de ces opérations permet l'obtention d'une première composition protéique conforme à l'invention.

Les trois lots préparés selon le procédé précédent présentent les caractéristiques figurées dans le tableau I suivant.

Tableau I

|  | Composition protéique I Lot 1 | Composition protéique I Lot 2 | Composition protéique I Lot 3 |
|---|---|---|---|
| Teneur en protéines totales (% N x 6,25) sur sec | 86.2 | 82.6 | 84.0 |
| Teneur en protéines solubles (% N x 6,25) sur sec | 67.8 | 58,5 | 49.0 |
| Profil des poids moléculaires (% relatif)<br><br>> 100.000 Da<br>15.000 et < 100.000 Da<br>> 5.000 et < 15.000 Da<br>< 5.000 Da | <br><br>3<br>25<br>25<br>47 | <br><br>2<br>23<br>29<br>46 | <br><br>7<br>31<br>21<br>41 |
| Solubilité aqueuse à pH 4 (% N x 6,25) sur sec | 14.0 | 13.3 | 11.5 |
| Solubilité aqueuse à pH 6 (% N x 6,25) sur sec | 45.6 | 36.9 | 28.1 |
| Matières grasses extractibles (%) sur sec | 1.3 | 1.5 | 2.8 |
| Activités anti-trypsiques (TIU/mg) sur sec | 3.0 | 3.7 | 4.2 |

Ces compositions protéiques, appartenant à la première famille de compositions protéiques conforme à l'invention, présentent une richesse en protéines totales supérieure à 80 %, dont plus de 40 %, voire plus de 60 % sont solubles dans l'eau.

On peut procéder, sur le floc obtenu à l'étape du procédé décrit ci-dessus, à un traitement thermique à 85°C pendant 10 minutes sur échangeur thermique à surface raclée, puis on atomise selon le protocole présenté ci-avant.

L'ensemble de ces opérations permet l'obtention d'une seconde composition protéique conforme à l'invention.

Les trois nouveaux lots préparés selon ces opérations complémentaires présentent les caractéristiques figurées dans le tableau II suivant.

Tableau II

|  | Composition protéique II Lot 1 | Composition protéique II Lot 2 | Composition protéique II Lot 3 |
|---|---|---|---|
| Teneur en protéines totales (% N x 6,25) sur sec | 85.2 | 85.1 | 86.8 |
| Teneur en protéines solubles (% N x 6,25) sur sec | 25.8 | 32.8 | 46.6 |
| Profil des poids moléculaires (% relatif)<br><br>> 100.000 Da<br>15.000 et < 100.000 Da<br>> 5.000 et < 15.000 Da<br>< 5.000 Da | <br><br>2<br>45<br>23<br>30 | <br><br>2<br>48<br>20<br>30 | <br><br>5<br>45<br>17<br>32 |
| Solubilité aqueuse à pH 4 (% N x 6,25) sur sec | 16.1 | 13.1 | 12.7 |
| Solubilité aqueuse à pH 6 (% N x 6,25) sur sec | 23.6 | 18.8 | 19.2 |

(suite)

|  | Composition protéique II Lot 1 | Composition protéique II Lot 2 | Composition protéique II Lot 3 |
|---|---|---|---|
| Matières grasses extractibles (%) sur sec | 1.2 | 0.6 | 2.8 |
| Activités anti-trypsiques (TIU/mg) sur sec | 2.8 | 3.7 | 3.5 |

Ces compositions protéiques appartenant à la deuxième famille de compositions protéiques conforme à l'invention, présentent une richesse en protéines totales supérieure à 70 %, dont plus de 25 %, voire près de 50 % sont solubles dans l'eau.

Le deuxième traitement thermique permet de diminuer légèrement la quantité de facteurs anti-trypsiques et conduit à une composition protéique de solubilité plus réduite à pH 6 (alors que la solubilité à une valeur de pH proche du pHi reste du même ordre de grandeur).

**Exemple 2**

Les compositions protéiques conformes à l'invention préparées en appliquant le procédé décrit dans l'exemple 1 sont comparées, dans le tableau III suivant, à des compositions protéiques connues par ailleurs.

Tableau III

| | PISANE® HD COSUCRA Lot 1 | PISANE® HD COSUCRA Lot 2 | PISANE® HD COSUCRA Lot 3 | PROPULSE™ PARRHEIM | Composition protéique I Lots 1, 2 et 3 | | | Composition protéique II Lots 1, 2 et 3 | | |
|---|---|---|---|---|---|---|---|---|---|---|
| Teneur en protéines totales (% N x 6,25) sur sec | 88.4 | 88.1 | 87.7 | 84.5 | 86.2 | 82.6 | 84.0 | 85.2 | 85.1 | 86.8 |
| Teneur en protéines solubles (% N x 6,25) sur sec | 17.4 | 8.9 | 19.7 | 16.6 | 67.8 | 58.5 | 49.0 | 25.8 | 32.8 | 46.6 |
| Profil des poids moléculaires (% relatif) : | | | | | | | | | | |
| ≥ 100.000 Da | 4 | 2 | 6 | 4 | 3 | 2 | 7 | 2 | 2 | 5 |
| ≥ 15.000 et < 100.000 Da | 53 | 60 | 53 | 54 | 25 | 23 | 31 | 45 | 48 | 45 |
| ≥ 5.000 et < 15.000 Da | 21 | 11 | 21 | 20 | 25 | 29 | 21 | 23 | 20 | 17 |
| < 5.000 Da | 22 | 27 | 19 | 22 | 47 | 46 | 41 | 30 | 30 | 32 |
| Solubilité aqueuse à pH 4 (% N x 6,25) sur sec | 6,6 | 8,3 | 9.5 | 17.3 | 14.0 | 13.3 | 11.5 | 16.1 | 13.1 | 12.7 |

(suite)

| | PISANE® HD COSUCRA Lot 1 | PISANE® HD COSUCRA Lot 2 | PISANE® HD COSUCRA Lot 3 | PROPULSE™ PARRHEIM | Composition protéique I Lots 1, 2 et 3 | | | Composition protéique II Lots 1, 2 et 3 | | |
|---|---|---|---|---|---|---|---|---|---|---|
| Solubilité aqueuse à pH 6 (% N x 6,25) sur sec | 15.5 | 10.6 | 15.0 | 22.0 | 45.6 | 36.9 | 28.1 | 23.6 | 18.8 | 19.2 |
| Matières grasses extractibles (%)sur sec | 1.2 | 1,1 | 1.3 | 1.9 | 1.3 | 1.5 | 2.8 | 1.2 | 0.6 | 2.8 |
| Activités anti-trypsiques (TIU/mg) sur sec | 3.7 | 2.6 | 3.8 | 4.9 | 3.0 | 3.7 | 4.2 | 2.8 | 3.7 | 3.5 |

Les compositions protéiques conformes à l'invention présentent un profil de distribution des poids moléculaires tout à fait particulier, différent pour les deux familles, par rapport aux compositions protéiques du commerce.

La première famille conforme à l'invention est caractérisée par un spectre tri-modal où plus de 40 % des protéines présentent un poids d'au plus de 5.000 Da, et où les protéines de poids moléculaire de plus de 5.000 et d'au plus de 15.000 Da et celles de poids moléculaire de plus de 15.000 et d'au plus de 100.000 Da sont dans des proportions comprises entre 21 à 31 %.

Aucune des compositions protéiques connues ne présentent un tel profil.

La seconde famille conforme à l'invention présente également un spectre tri-modal, où cette fois plus de 45 % des protéines ont un poids moléculaire de plus de 15.000 et d'au plus de 100.000 Da, le reste des protéines se répartissant dans les intervalles de plus de 5.000 et d'au plus de 15.000 Da d'une part, et d'au plus de 5.000 Da d'autre part.

Ce profil de distribution des poids moléculaires est plus typique des compositions de protéines de pois du commerce, mais aucune d'entre elles ne présente une telle solubilité.

La teneur en matières grasses extractibles et celle en facteurs anti-trypsiques rendent les compositions conformes à l'invention parfaitement adaptées aux applications en alimentation humaine et animale.

## Revendications

1. Composition de protéines de pois, **caractérisée en ce qu'**elle présente :

   - une teneur en protéines sur matière sèche d'au moins 60 % en poids, de préférence comprise entre 60 et 95% en poids,
   - un profil de distribution des poids moléculaires constitué de :

     - 1 à 8 %, de préférence de 1,5 à 3 % de protéines de plus de 100.000 Da,
     - 20 à 55 %, de préférence de 25 à 55 % de protéines de plus de 15.000 et d'au plus de 100.000 Da,
     - 15 à 30 % de protéines de plus de 5.000 et d'au plus de 15.000 Da,
     - et de 25 à 50 %, de préférence de 25 à 45 % de protéines d'au plus de 5.000 Da,

   - une teneur en protéines solubles, exprimée selon un test de mesure de la solubilité dans l'eau des protéines, comprise entre 20 et 85 %, de préférence comprise entre 20 et 65 %.

2. Composition selon la revendication 1, **caractérisée en ce que** sa solubilité aqueuse est :

   - comprise entre 10 et 20 % à pH 4,
   - comprise entre 15 et 50 %, de préférence comprise entre 20 et 45 % à pH 6.

3. Composition selon l'une ou l'autre des revendications 1 et 2, **caractérisée en ce que** sa teneur en matières grasses extractibles est comprise entre 0,3 et 5 %, de préférence comprise entre 0,3 et 3 % en poids, plus préférentiellement comprise entre 0,3 et 1,5 %.

4. Composition selon l'une quelconque des revendications 1 à 3, **caractérisée en ce que** sa teneur en facteurs anti-trypsiques est comprise entre 2 et 5,5 TIU/mg.

5. Composition selon l'une quelconque des revendications 1 à 4, **caractérisée en ce qu'**elle présente un profil de distribution des poids moléculaires constitué de :

   - 20 à 40 %, de préférence de 25 à 35 % de protéines de plus de 15.000 et d'au plus 100.000 Da,
   - 15 à 30 %, de préférence de 20 à 30 % de protéines de plus de 5.000 et d'au plus 15.000 Da,
   - et de 40 à 50 %, de préférence de 40 à 45 % de protéines d'au plus 5.000 Da,
   - une teneur en protéines solubles, déterminée selon un test de mesure de la solubilité dans l'eau des protéines, comprise entre 40 et 85 %, de préférence comprise entre 60 et 65 %.

6. Composition selon la revendication 5, **caractérisée en ce que** sa solubilité aqueuse est :

   - comprise entre 10 et 15 %, de préférence comprise entre 10 et 13,5 % à pH 4,
   - comprise entre 25 et 50, de préférence compris entre 40 et 45 % à pH 6.

7. Composition selon l'une quelconque des revendications 1 à 4, **caractérisée en ce qu'**elle présente un profil de distribution des poids moléculaires constitué de :

    - 40 à 55 %, de préférence de 50 à 55 % de protéines de plus de 15.000 et d'au plus 100.000 Da,
    - 15 à 30 %, de préférence de 15 à 20 % de protéines de plus de 5.000 et d'au plus 15.000 Da
    - et de 25 à 40 %, de préférence de 25 à 30 % de protéines d'au plus de 5.000 Da,
    - une teneur en protéines solubles, déterminée selon un test de mesure de la solubilité dans l'eau des protéines totales, comprise entre 20 et 55 %.

8. Composition selon la revendication 7, **caractérisée en ce que** sa solubilité aqueuse est

    - comprise entre 10 et 20 % à pH 4,
    - comprise entre 15 et 35 %, de préférence de 20 à 35 % à pH 6.

9. Procédé de fabrication de la composition de protéines de pois selon l'une quelconque des revendications 1 à 8, **caractérisé en ce qu'**il consiste dans la succession des étapes suivantes :

    - préparer une farine par broyage de pois secs préalablement nettoyés, triés, émondés, dépoussiérés,
    - mettre en suspension la farine de pois dans de l'eau,
    - fractionner ladite suspension, de manière à isoler une fraction riche en protéines et en solubles,
    - isoler la composante protéique de ladite fraction par une technique de floculation thermique au pH isoélectrique desdites protéines et à une température comprise entre 40 et 70°C pendant de 5 à 30 minutes, de préférence de 10 à 30 minutes,
    - centrifuger le mélange précipité à l'aide d'une décanteuse centrifuge ou une séparatrice à assiettes de manière à récupérer les protéines solubles dans le précipité,
    - diluer le précipité dans de l'eau pour obtenir une matière sèche comprise entre 5 et 15 %,
    - rectifier le pH de la solution à une valeur comprise entre 7 et 7,5,
    - éventuellement, traiter thermiquement ledit précipité remis en suspension dans de l'eau à une température de 75 à 95°C pendant de 10 minutes à 1 heure,
    - récupérer et sécher la composition protéique ainsi obtenue.

10. Procédé selon la revendication 9, **caractérisé en ce que** l'étape de fractionnement de la suspension de farine de pois dans de l'eau est réalisée à l'aide d'un équipement choisi dans le groupe constitué des hydrocyclones et des décanteurs centrifuges.

11. Procédé selon la revendication 10, **caractérisé en ce que** la fraction riche en protéines et solubles est obtenue par les étapes consistant à :

    - fractionner la suspension de farine dans l'eau sur des décanteurs centrifuges, de manière à isoler une fraction riche en protéines et solubles d'une fraction constituée du mélange amidon et fibres internes,
    - récupérer la fraction riche en protéines et solubles dans le surnageant des décanteurs centrifuges.

12. Procédé selon la revendication 10, **caractérisé en ce que** la fraction riche en protéines et solubles est obtenue par les étapes consistant à :

    - fractionner la suspension de farine dans l'eau sur des hydrocyclones, de manière à isoler une fraction riche en amidon d'une fraction constituée du mélange protéines, fibres internes et solubles,
    - traiter la fraction constituée du mélange de protéines, de fibres internes et solubles sur des décanteurs centrifuges de manière à séparer une fraction riche en fibres internes d'une fraction riche en protéines et solubles,
    - récupérer la fraction riche en protéines et solubles dans le surnageant des décanteurs centrifuges.

13. Procédé de fabrication de la composition de protéines de pois selon l'une ou l'autre des revendications 5 et 6, **caractérisé en ce qu'**il consiste dans la succession des étapes suivantes :

    - préparer une farine par broyage de pois secs préalablement nettoyés, triés, émondés, dépoussiérés,
    - mettre en suspension la farine de pois dans de l'eau,
    - fractionner ladite suspension, de manière à isoler une fraction riche en protéines et en solubles,
    - isoler la composante protéique de ladite fraction riche en protéines et en solubles par une technique de floculation thermique au pH isoélectrique desdites protéines et à une température de 60°C pendant 10 minutes,
- diluer le précipité dans de l'eau pour obtenir une matière sèche comprise entre 5 et 15 %,
- rectifier le pH de la solution à une valeur comprise entre 7 et 7,5,
- récupérer et éventuellement sécher la composition protéique ainsi obtenue.

14. Procédé de fabrication de la composition de protéines de pois selon l'une ou l'autre des revendications 7 et 8, **caractérisé en ce qu'**il consiste dans la succession des étapes suivantes :

- préparer une farine par broyage de pois secs préalablement nettoyés, triés, émondés, dépoussiérés,
- mettre en suspension la farine de pois dans de l'eau,
- fractionner ladite suspension, de manière à isoler une fraction riche en protéines et en solubles,
- isoler la composante protéique de ladite fraction riche en protéines et en solubles par une technique de floculation thermique au pH isoélectrique desdites protéines et à une température de 60°C pendant 10 minutes,
- centrifuger le mélange précipité à l'aide d'une décanteuse centrifuge de manière à récupérer les protéines solubles dans le précipité,
- diluer le précipité dans de l'eau pour obtenir une matière sèche comprise entre 5 et 15 %,
- rectifier le pH de la solution à une valeur comprise entre 7 et 7,5,
- traiter thermiquement ledit précipité remis en suspension dans de l'eau à une température de 85°C pendant 10 minutes,
- récupérer et sécher la composition protéique ainsi obtenue.

15. Utilisation de la composition selon les revendications 1 à 8 ou susceptible d'être obtenue selon le procédé des revendications 9 à 14 en fermentation, en nutrition animale et surtout dans des applications alimentaires, dans les boissons et produits laitiers, dans les mélanges de poudres destinées à des produits de régime, ou pour sportifs, dans les soupes et sauces, dans les produits à base de viandes, plus particulièrement dans les secteurs des pâtes fines et des saumures, dans les produits à base de poissons, comme les produits à base de surimi, dans les produits céréaliers, comme pain, pates, biscuits, pâtisseries, céréales et barres, dans les produits végétariens et plats cuisinés.

16. Utilisation de la composition selon les revendications 5 et 6 ou susceptible d'être obtenue selon le procédé de la revendication 13 dans des applications alimentaires, dans les boissons et les produits laitiers et notamment en charcuterie, plus particulièrement dans les secteurs des saumures.

17. Utilisation de la composition selon les revendications 7 et 8 ou susceptible d'être obtenue selon le procédé de la revendication 14 dans des applications alimentaires, notamment en charcuterie, plus particulièrement dans les secteurs des pâtes fines.

**Claims**

1. A pea protein composition, **characterized in that** it has:

- a protein content of at least 60% by weight, preferably ranging from 60% to 95% by weight, on a dry weight basis,
- a molecular weight distribution profile which is constituted of:

- from 1% to 8%, preferably from 1.5% to 3% of proteins of more than 100 000 Da,
- from 20% to 55%, preferably from 25% to 55% of proteins of more than 15 000 and of no more than 100 000 Da,
- from 15% to 30% of proteins of more than 5000 and of no more than 15 000 Da,
- and from 25% to 50%, preferably from 25% to 45% of proteins of no more than 5000 Da,

- a soluble protein content, expressed according to a test for measuring the water-solubility of proteins, ranging from 20% to 85%, preferably ranging from 20% to 65%.

2. The composition as claimed in claim 1, **characterized in that** its aqueous solubility:

- ranges from 10% to 20% at pH 4,
- ranges from 15% to 50%, preferably from 20% to 45% at pH 6.

3. The composition as claimed in either of claims 1 and 2, **characterized in that** its extractable fat content ranges from 0.3% to 5%, preferably ranges from 0.3% to 3% by weight, more preferably ranges from 0.3% to 1.5%.

4. The composition as claimed in any one of claims 1 to 3, **characterized in that** its antitryptic factor content ranges from 2 to 5.5 TIU/mg.

5. The composition as claimed in any one of claims 1 to 4, **characterized in that** it has a molecular weight distribution profile which is constituted of:

   - from 20% to 40%, preferably from 25% to 35% of proteins of more than 15 000 and of no more than 100 000 Da,
   - from 15% to 30%, preferably from 20% to 30% of proteins of more than 5000 and of no more than 15 000 Da,
   - and from 40% to 50%, preferably from 40% to 45% of proteins of no more than 5000 Da,
   - a soluble protein content, determined according to a test for measuring the water-solubility of proteins, ranging from 40% to 85%, preferably ranging from 60% to 65%.

6. The composition as claimed in claim 5, **characterized in that** its aqueous solubility:

   - ranges from 10% to 15%, preferably ranges from 10% to 13.5% at pH 4,
   - ranges from 25% to 50%, preferably ranges from 40% to 45% at pH 6.

7. The composition as claimed in any one of claims 1 to 4, **characterized in that** it has a molecular weight distribution profile which is constituted of:

   - from 40% to 55%, preferably from 50% to 55% of proteins of more than 15 000 and of no more than 100 000 Da,
   - from 15% to 30%, preferably from 15% to 20% of proteins of more than 5000 and of no more than 15 000 Da,
   - and from 25% to 40%, preferably from 25% to 30% of proteins of no more than 5000 Da,
   - a soluble protein content, determined according to a test for measuring the water-solubility of the total proteins, ranging from 20% to 55%.

8. The composition as claimed in claim 7, **characterized in that** its aqueous solubility:

   - ranges from 10% to 20% at pH 4,
   - ranges from 15% to 35%, preferably from 20% to 35% at pH 6.

9. A method for producing the pea protein composition as claimed in any one of claims 1 to 8, **characterized in that** it consists of the succession of the following steps:

   - preparing a flour by grinding dry peas previously cleaned, sorted, blanched and dusted,
   - suspending the pea flour in water,
   - fractionating said suspension so as to isolate a fraction rich in proteins and in soluble materials,
   - isolating the protein component of said fraction by a thermal flocculation technique at the isoelectric pH of said proteins and at a temperature ranging from 40 to 70°C for from 5 to 30 minutes, preferably from 10 to 30 minutes,
   - centrifuging the precipitated mixture using a centrifugal decanter or a plate separator so as to recover the soluble proteins in the precipitate,
   - diluting the precipitate in water so as to obtain a solids content ranging from 5% to 15%,
   - correcting the pH of the solution to a value ranging from 7 to 7.5,
   - optionally, thermally treating said precipitate resuspended in water at a temperature of from 75 to 95°C for from 10 minutes to 1 hour,
   - recovering and drying the protein composition thus obtained.

10. The method as claimed in claim 9, **characterized in that** the step of fractionation of the pea flour-in-water suspension is carried out using equipment selected from the group consisting of hydrocyclones and centrifugal decanters.

11. The method as claimed in claim 10, **characterized in that** the fraction rich in proteins and soluble materials is obtained by the steps consisting in:

   - fractionating the flour-in-water suspension on centrifugal decanters so as to isolate a fraction rich in proteins and soluble materials from a fraction constituted of the mixture of starch and internal fibers,

- recovering the fraction rich in proteins and soluble materials in the supernatant of the centrifugal decanters.

**12.** The method as claimed in claim 10, **characterized in that** the fraction rich in proteins and soluble materials is obtained by the steps consisting in:

- fractionating the flour-in-water suspension on hydrocyclones so as to isolate a fraction rich in starch from a fraction constituted of the mixture of proteins, internal fibers and soluble materials,
- treating the fraction constituted of the mixture of proteins, internal fibers and soluble materials on centrifugal decanters so as to separate a fraction rich in internal fibers from a fraction rich in proteins and soluble materials,
- recovering the fraction rich in proteins and soluble materials in the supernatant of the centrifugal decanters.

**13.** A method for producing the pea protein composition as claimed in either of claims 5 and 6, **characterized in that** it consists of the succession of the following steps:

- preparing a flour by grinding dry peas previously cleaned, sorted, blanched and dusted,
- suspending the pea flour in water,
- fractionating said suspension so as to isolate a fraction rich in proteins and in soluble materials,
- isolating the protein component of said fraction rich in proteins and in soluble materials by a thermal flocculation technique at the isoelectric pH of said proteins and at a temperature of 60°C for 10 minutes,
- diluting the precipitate in water so as to obtain a solids content ranging from 5% to 15%,
- correcting the pH of the solution to a value ranging from 7 to 7.5,
- recovering and, optionally, drying the protein composition thus obtained.

**14.** A method for producing the pea protein composition as claimed in either of claims 7 and 8, **characterized in that** it consists of the succession of the following steps:

- preparing a flour by grinding dry peas previously cleaned, sorted, blanched and dusted,
- suspending the pea flour in water,
- fractionating said suspension so as to isolate a fraction rich in proteins and in soluble materials,
- isolating the protein component of said fraction rich in proteins and in soluble materials by a thermal flocculation technique at the isoelectric pH of said proteins and at a temperature of 60°C for 10 minutes,
- centrifuging the precipitated mixture using a centrifugal decanter so as to recover the soluble proteins in the precipitate,
- diluting the precipitate in water so as to obtain a solids content ranging from 5% to 15%,
- correcting the pH of the solution to a value ranging from 7 to 7.5,
- thermally treating said precipitate resuspended in water at a temperature of 85°C for 10 minutes,
- recovering and drying the protein composition thus obtained.

**15.** The use of the composition as claimed in claims 1 to 8 or that can be obtained according to the method of claims 9 to 14, in fermentation, in animal nutrition and especially in food applications, in drinks and milk products, in mixtures of powders intended for diet products, or for sports people, in soups and sauces, in meat-based products, more particularly in the fine pasta and brine sectors, in fish-based products, such as surimi-based products, in cereal products, such as bread, pasta, biscuits, pastries, cereals and bars, and in vegetarian products and ready meals.

**16.** The use of the composition as claimed in claims 5 and 6 or that can be obtained according to the method of claim 13, in food applications, in drinks and milk products, and especially in pork meats, more particularly in the brine sectors.

**17.** The use of the composition as claimed in claims 7 and 8 or that can be obtained according to the method of claim 14, in food applications, especially in pork meats, more particularly in the fine pasta sectors.

**Patentansprüche**

**1.** Erbsenprotein-Zusammensetzung, **dadurch gekennzeichnet, dass** sie:

- einen Proteingehalt von mindestens 60 Gewichts-%, bevorzugt zwischen 60 und 95 Gewichts-% in der Trockenmasse,
- ein Profil der Molekulargewichtsverteilung, bestehend aus:

- 1 bis 8%, bevorzugt von 1,5 bis 3% Proteinen mit mehr als 100.000 Da,
- 20 bis 55%, bevorzugt von 25 bis 55% Proteinen mit mehr als 15.000 und mit bis zu 100.000 Da,
- 15 bis 30% Proteinen mit mehr als 5.000 und mit bis zu 15.000 Da,
- und von 25 bis 50%, bevorzugt von 25 bis 45% Proteinen mit bis zu 5.000 Da,

- einen Gehalt an löslichen Proteinen, ausgedrückt gemäß einem Test zur Messung der Wasserlöslichkeit von Proteinen, zwischen 20 und 85%, bevorzugt zwischen 20 und 65%, aufweist.

**2.** Zusammensetzung gemäß Anspruch 1, **dadurch gekennzeichnet, dass** ihre Wasserlöslichkeit

- zwischen 10 und 20% bei pH-Wert 4,
- zwischen 15 und 50%, bevorzugt zwischen 20 und 45% bei pH-Wert 6

ist.

**3.** Zusammensetzung gemäß einem der Ansprüche 1 und 2, **dadurch gekennzeichnet, dass** ihr Gehalt an extrahierbaren Fetten zwischen 0,3 und 5%, bevorzugt zwischen 0,3 und 3 Gewichts-%, stärker bevorzugt zwischen 0,3 und 1,5% ist.

**4.** Zusammensetzung gemäß einem der Ansprüche 1 bis 3, **dadurch gekennzeichnet, dass** ihr Gehalt an Antitrypsin-Faktoren zwischen 2 und 5,5 TIU/mg ist.

**5.** Zusammensetzung gemäß einem der Ansprüche 1 bis 4, **dadurch gekennzeichnet, dass** sie ein Profil der Molekulargewichtsverteilung, bestehend aus:

- 20 bis 40%, bevorzugt von 25 bis 35% Proteinen mit mehr als 15.000 und mit bis zu 100.000 Da,
- 15 bis 30%, bevorzugt von 20 bis 30% Proteinen mit mehr als 5.000 und mit bis zu 15.000 Da,
- und von 40 bis 50%, bevorzugt von 40 bis 45% Proteinen mit bis zu 5.000 Da,
- einen Gehalt an löslichen Proteinen, bestimmt gemäß einem Test zur Messung der Wasserlöslichkeit von Proteinen, zwischen 40 und 85%, bevorzugt zwischen 60 und 65%,

aufweist.

**6.** Zusammensetzung gemäß Anspruch 5, **dadurch gekennzeichnet, dass** ihre Wasserlöslichkeit

- zwischen 10 und 15%, bevorzugt zwischen 10 und 13,5% bei pH-Wert 4,
- zwischen 25 und 50, bevorzugt zwischen 40 und 45% bei pH-Wert 6

ist.

**7.** Zusammensetzung gemäß einem der Ansprüche 1 bis 4, **dadurch gekennzeichnet, dass** sie ein Profil der Molekulargewichtsverteilung, bestehend aus:

- 40 bis 55%, bevorzugt von 50 bis 55% Proteinen mit mehr als 15.000 und mit bis zu 100.000 Da,
- 15 bis 30%, bevorzugt von 15 bis 20% Proteinen mit mehr als 5.000 und mit bis zu 15.000 Da,
- und von 25 bis 40%, bevorzugt von 25 bis 30% Proteinen mit bis zu 5.000 Da,
- einen Gehalt an löslichen Proteinen, bestimmt gemäß einem Test zur Messung der Wasserlöslichkeit der Gesamtproteine in Wasser, zwischen 20 und 55%,

aufweist.

**8.** Zusammensetzung gemäß Anspruch 7, **dadurch gekennzeichnet, dass** ihre Wasserlöslichkeit

- zwischen 10 und 20% bei pH-Wert 4,
- zwischen 15 und 35%, bevorzugt zwischen 20 und 35% bei pH-Wert 6

ist.

9. Verfahren zur Herstellung der Erbsenprotein-Zusammensetzung gemäß einem der Ansprüche 1 bis 8, **dadurch gekennzeichnet, dass** es aus der Aufeinanderfolge der folgenden Schritte besteht:

- Herstellen eines Mehls durch Zerkleinerung vorab gereinigter, sortierter, verlesener, entstaubter trockener Erbsen,
- Suspendieren des Erbsenmehls in Wasser,
- Fraktionieren dieser Suspension, um eine Fraktion zu isolieren, die reich an Proteinen und an löslichen Stoffen ist,
- Isolieren des Proteinbestandteils dieser Fraktion mittels einer thermischen Fällungstechnik bei dem isoelektrischen pH-Wert dieser Proteine und bei einer Temperatur zwischen 40 und 70°C während 5 bis 30 Minuten, bevorzugt 10 bis 30 Minuten,
- Zentrifugieren der ausgefällten Mischung mittels eines Zentrifugaldekanters oder eines Plattenseparators, um die löslichen Proteine in der Ausfällung zu gewinnen,
- Verdünnen der Ausfällung mit Wasser, um zwischen 5 und 15% Trockenmasse zu erhalten,
- Korrigieren des pH-Werts der Lösung auf einen Wert zwischen 7 und 7,5,
- gegebenenfalls thermisches Behandeln dieser in Wasser resuspendierten Ausfällung bei einer Temperatur von 75 bis 95°C während 10 Minuten bis 1 Stunde,
- Gewinnen und Trocknen der so erhaltenen Protein-Zusammensetzung.

10. Verfahren gemäß Anspruch 9, **dadurch gekennzeichnet, dass** der Schritt der Fraktionierung der Suspension des Erbsenmehls in Wasser mittels einer Apparatur, die aus der Gruppe, bestehend aus Hydrozyklonen und Zentrifugaldekantern ausgewählt ist, durchgeführt wird.

11. Verfahren gemäß Anspruch 10, **dadurch gekennzeichnet, dass** die Fraktion, die reich an Proteinen und an löslichen Stoffen ist, durch die Schritte, bestehend aus:

- Fraktionieren der Suspension des Mehls in Wasser auf Zentrifugaldekantern, um eine Fraktion, die reich an Proteinen und an löslichen Stoffen ist, aus einer Fraktion, die aus der Mischung aus Stärke und internen Fasern besteht, zu isolieren,
- Gewinnen der Fraktion, die reich an Proteinen und an löslichen Stoffen ist, in dem Überstand der Zentrifugaldekanter,

erhalten wird.

12. Verfahren gemäß Anspruch 10, **dadurch gekennzeichnet, dass** die Fraktion, die reich an Proteinen und an löslichen Stoffen ist, durch die Schritte, bestehend aus:

- Fraktionieren der Suspension des Mehls in Wasser auf Hydrozyklonen, um eine Fraktion, die reich an Stärke ist, von einer Fraktion, die aus der Mischung aus Proteinen, internen Fasern und löslichen Stoffen besteht, zu isolieren,
- Behandeln der Fraktion, die aus der Mischung aus Proteinen, internen Fasern und löslichen Stoffen besteht, auf Zentrifugaldekantern, um eine Fraktion, die reich an internen Fasern ist von einer Fraktion, die reich an Proteinen und an löslichen Stoffen ist, abzutrennen,
- Gewinnen der Fraktion, die reich an Proteinen und an löslichen Stoffen ist, in dem Überstand der Zentrifugaldekanter,

erhalten wird.

13. Verfahren zur Herstellung der Erbsenprotein-Zusammensetzung gemäß einem der Ansprüche 5 und 6, **dadurch gekennzeichnet, dass** es aus der Aufeinanderfolge der folgenden Schritte besteht:

- Herstellen eines Mehls durch Zerkleinerung vorab gereinigter, sortierter, verlesener, entstaubter trockener Erbsen,
- Suspendieren des Erbsenmehls in Wasser,
- Fraktionieren dieser Suspension, um eine Fraktion, der reich an Proteinen und an löslichen Stoffen ist, zu isolieren,
- Isolieren des Proteinbestandteils dieser Fraktion, die reich an Proteinen und an löslichen Stoffen ist, mittels einer thermischen Fällungstechnik bei dem isoelektrischen pH-Wert dieser Proteine und bei einer Temperatur von 60°C während 10 Minuten,
- Verdünnen der Ausfällung mit Wasser, um zwischen 5 und 15% Trockenmasse zu erhalten,
- Korrigieren des pH-Werts der Lösung auf einen Wert zwischen 7 und 7,5,
- Gewinnen und gegebenenfalls Trocknen der so erhaltenen Protein-Zusammensetzung.

14. Verfahren zur Herstellung der Erbsenprotein-Zusammensetzung gemäß einem der Ansprüche 7 und 8, **dadurch gekennzeichnet, dass** es aus der Aufeinanderfolge der folgenden Schritte besteht:

- Herstellen eines Mehls durch Zerkleinerung vorab gereinigter, sortierter, verlesener, entstaubter trockener Erbsen,
- Suspendieren des Erbsenmehls in Wasser,
- Fraktionieren dieser Suspension, um eine Fraktion, die reich an Proteinen und an löslichen Stoffen ist, zu isolieren,
- Isolieren des Proteinbestandteils dieser Fraktion, der reich an Proteinen und an löslichen Stoffen ist, mittels einer thermischen Fällungstechnik bei dem isoelektrischen pH-Wert dieser Proteine und bei einer Temperatur von 60°C während 10 Minuten,
- Zentrifugieren der ausgefällten Mischung mittels eines Zentrifugaldekanters, um die löslichen Proteine in der Ausfällung zu gewinnen,
- Verdünnen der Ausfällung mit Wasser, um zwischen 5 und 15% Trockenmasse zu erhalten,
- Korrigieren des pH-Werts der Lösung auf einen Wert zwischen 7 und 7,5,
- thermisches Behandeln dieser in Wasser resuspendierten Ausfällung bei einer Temperatur von 85°C während 10 Minuten,
- Gewinnen und Trocknen der so erhaltenen Protein-Zusammensetzung.

15. Verwendung der Zusammensetzung gemäß den Ansprüchen 1 bis 8 oder erhältlich gemäß dem Verfahren der Ansprüche 9 bis 14 in der Fermentation, in der Tierernährung und vor allem in Ernährungs-Anwendungen, in Getränken und Milchprodukten, in Pulvermischungen, die für Diätprodukte oder für Sportler bestimmt sind, in Suppen und Saucen, in Produkten auf Fleischbasis, insbesondere auf den Gebieten der feinen Teigwaren und der Pökelwaren, in Produkten auf Fischbasis, wie den Produkten auf der Basis von Surimi, in Getreideprodukten, wie Brot, Teigwaren, Gebäck, Konditorwaren, Cerealien und Riegeln, in vegetarischen Produkten und Fertiggerichten.

16. Verwendung der Zusammensetzung gemäß den Ansprüchen 5 und 6 oder erhältlich gemäß dem Verfahren des Anspruchs 13 in Ernährungs-Anwendungen, in Getränken und Milchprodukten und besonders in Wurstwaren, insbesondere auf den Gebieten der Pökelwaren.

17. Verwendung der Zusammensetzung gemäß den Ansprüchen 7 und 8 oder erhältlich gemäß dem Verfahren des Anspruchs 14 in Ernährungs-Anwendungen, besonders in Wurstwaren, insbesondere auf den Gebieten der feinen Teigwaren.

## RÉFÉRENCES CITÉES DANS LA DESCRIPTION

**Documents brevets cités dans la description**

- US 20040091600 A

- EP 1400537 A

**Littérature non-brevet citée dans la description**

- **J. GUEGUEN.** *Proceedings of european congress on plant proteins for humain food,* 1983, 267-304

- **M. SORAL-SMIETANA et al.** *Polish Journal of food and nutrition Sciences,* 1998, vol. 7/48 (2), 193-200